# EUROPÄISCHE PATENTANMELDUNG

(11) **EP 1 306 353 A1**
(43) Veröffentlichungstag der Anmeldung: **02.05.2003**
(21) Anmeldenummer: 01125730.0
(22) Anmeldetag: 27.10.2001
(51) Int. Cl.: C03B 5/225

(54) **Verfahren zur Herstellung von Glasprodukten durch Läutern unter Unterdruck ohne Zusatz von As2O3 bzw. Sb2O3**

(71) Anmelder: Schott Glas, 55122 Mainz (DE); CARL-ZEISS-STIFTUNG trading as Schott Glas, 55122 Mainz (DE)
(72) Erfinder: Eichholz, Rainer, 55126 Mainz (DE); Greulich-Hickmann, Norbert, Dr., 55127 Mainz (DE); Sprenger, Andreas, 55122 Mainz (DE); Karetta, Frank, Dr., 67596 Dittelsheim-Hessloch (DE); Münch, Wolfgang, 55270 Bubenheim (DE); Witte, Jörg, Dr., 64295 Darmstadt (DE)
(74) Vertreter: Weitzel, Wolfgang, Dr.-Ing.

(57) **Zusammenfassung**

Die Erfindung betrifft ein Verfahren zum Herstellen von Produkten mit anspruchsvoller Blasenspezifikation aus Glas ohne Zusatz von As₂O₃ bzw. Sb₂O₃

Die Erfindung umfaßt die folgenden Verfahrensschritte:
- es wird aus einem Gemenge oder aus Scherben oder aus einem Gemisch dieser beiden eine Glasschmelze hergestellt;
- die Glasschmelze wird einem Läuterprozeß ohne Zusatz von As₂O₃ bzw. Sb₂O₃ unterzogen;
- das Läutern erfolgt unter Unterdruck ohne Zusatz von As₂O₃ bzw. Sb₂O₃;
- die zu läuternde Schmelze gehört zu einer der nachstehenden Glasarten:
   Blei-Glas
   Glaskeramik
   Borosilicat-Glas
   alkalifreies Glas
   Kalk-Natron-Glas;
   das geläuterte Glas wird mit Hilfe einer der nachstehenden Heißformgebungsverfahren zu einem Produkt verarbeitet:
   Floaten
   Overflow-Fusion
   Rohrziehverfahren, wie dem Danner- oder Vello-Verfahren
   Pressen
   Blasen
   Walzen
   Up-Draw
   Down-Draw.

## Beschreibung

Die Erfindung betrifft allgemein das Herstellen von Glasprodukten aus Scherben oder Gemenge. Die drei wesentlichen Stationen des Herstellungsprozesses umfassen das Erschmelzen, sodann das Läutern und schließlich das Homogenisieren.

Die Herstellung von hochwertigen Spezialgläsern erfordert nach dem Einschmelzen den Prozeßschritt der Läuterung, um Restblasen aus der Schmelze zu entfernen. Stand der Technik ist die Läuterung von Gläsern durch Zugabe von Läutermitteln wie Redox-Läutermitteln oder Verdampfungsläutermitteln. Man spricht hier von der chemischen Läuterung, da dabei die Freisetzung von Gasen aus der Schmelze genutzt wird, um vorhandene kleine Blasen aufzublähen und damit den Blasenaufstieg zu erleichtern.

Neben den Methoden der chemischen Läuterung werden alternativ oder ergänzend in der Literatur auch physikalische Effekte zum Austreiben der Blasen und damit zur Läuterung genutzt, wie zum Beispiel die Zentrifugalkraft (US 3 893 836) oder die Verringerung der Badtiefe und damit die Erleichterung des Aufstiegs von Blasen an die Schmelzoberfläche (DE 19 71 03 51 C1).

Es ist bekannt, die Läuterung durch Erhöhung der Temperatur der Schmelze zu fördern. Dem sind jedoch bei Verwendung von Feuerfestmaterial für den Läuterbehälter Grenzen gesetzt. Werden hochzirkonhaltige Keramiken verwendet, so sind Temperaturen von maximal 1650° C realisierbar.

Es ist auch bekannt, das Läutern in einer Einrichtung durchzuführen, die nach dem sogenannten Skull-Prinzip arbeitet. Siehe EP 0 528 025 B1. Eine solche Vorrichtung umfaßt einen Tiegel, dessen Wandung aus einem Kranz von Metallrohren gebildet ist, die an ein Kühlmedium anschließbar sind, mit Schlitzen zwischen einander benachbarten Metallrohren. Die Vorrichtung umfaßt ferner eine Induktionsspule, die die Tiegelwandung umgibt und über welche Hochfrequenzenergie in den Tiegelinhalt einkoppelbar ist. Diese direkte Beheizung der Glasschmelze mittels Einstrahlung von Hochfrequenzenergie erfolgt bei einer Frequenz von 10 kHz bis 5 MHz.

Ein solcher Tiegel erlaubt wesentlich höhere Temperaturen, als ein Gefäß aus Feuerfestmaterial. Vorteil der Hochtemperaturläuterung gegenüber allen anderen physikalischen Läuterverfahren ist, daß sie aufgrund der hohen Temperaturen sehr effektiv und schnell ist. Die Prozesse laufen deutlich rascher ab bei hohen Temperaturen, so daß sehr kleine, schnelle Aggregatmodule für den Prozeß der Läuterung bereitgestellt werden können.

DE 20 33 074A beschreibt eine Anlage zum kontinuierlichen Erschmelzen und Läutern von Glas. Dabei ist eine Läutereinrichtung vorgesehen, die nach dem Skull-Prinzip arbeitet. Dabei gelangt die Schmelze aus dem Bodenbereich des Schmelzgefäßes über einen Verbindungskanal zum Läutergefäß. Dort tritt es in dessen Bodenbereich ein. Der Glasstrom im Läutergefäß steigt somit von unten nach oben auf. Dies hat den Vorteil, daß die Strömung die selbe Richtung wie die Blasen-Auftriebskraft hat. Die zu entfernenden Blasen gelangen zur heißen Oberfläche der Schmelze und treten aus dieser aus.

Ein Nachteil dieser Ausführungsform besteht darin, daß der Verbindungskanal zwischen der Einschmelzwanne und der Hochfrequenz-Läutereinrichtung aufgrund hoher Strömungsgeschwindigkeiten einem starken Verschleiß ausgesetzt ist.

Ein besonders interessantes Verfahren zum Läutern ist das Läutern unter Unterdruck. Dies ist aus zahlreichen Veröffentlichungen bekannt geworden, beispielsweise aus US 1 598 308 A. Dabei wird die Oberfläche der zu läuternden Schmelze während des Läuterns einem Unterdruck ausgesetzt. Die Folge hiervon ist, daß die Entgasung rascher und intensiver vonstatten geht.

Weitere wichtige Schriften zu diesem Thema sind die folgenden: EP 0 908 417 A2, EP 0 556 576 A1, EP 0 759 524 B1, EP 0 967 179 A1, EP 0 987 180 A1, EP 0 965 567 A1, EP 0 963 955 A1, EP 0 989 099 A1, EP 1 002 769 A1, EP 1 044 029 A1,

Der Zweck der Läuterung besteht bekanntlich darin, Restblasen aus der Schmelze zu entfernen. Dabei sollen die Blasen so schnell wie möglich zur Oberfläche der Schmelze aufsteigen und aus dieser austreten.

Bekannt ist die Verwendung von chemischen Läutermitteln wie Redox-Läutermitteln oder Verdampfungs-Läutermitteln. Diese tragen dazu bei, Gase aus der Schmelze freizusetzen und somit bereits vorhandene Blasen aufzublähen.

Es gibt Läutermittel, die sehr wirksam sind, jedoch den Nachteil haben, daß sie zugleich toxisch sind. Hierzu gehören die Oxide As₂O₃ und Sb₂O₃.

Bei Verzicht auf diese effektiven aber toxischen Läutermittel werden die vorhandenen Blasen nicht mehr ausreichend aufgebläht. Die Aufstiegsgeschwindigkeit der Blasen in der Schmelze wird verringert beziehungsweise ein Aufsteigen findet überhaupt nicht statt, so daß die Blasen gar nicht an die Oberfläche der Schmelze gelangen.

Dies hat zur Folge, daß die Entgasung nur unvollständig ist, und somit die Läuterung nicht den gewünschten Erfolg hat.

Der Erfindung liegt die Aufgabe zugrunde, ein Verfahren anzugeben, mit dem sich Produkte aus Glas mit anspruchsvoller Blasenspezifikation ohne Einsatz von As₂O₃ bzw. Sb₂O₃ in Spezifikation herstellen lassen.

Diese Aufgabe wird durch die Merkmale der unabhängigen Ansprüche gelöst.

Die Erfinder haben überraschend festgestellt, daß durch die Kombination verschiedener Verfahrensschritte sich Produkte mit anspruchsvoller Blasenspezifikation aus verschiedenen Glasarten ohne den Einsatz von As₂O₃ bzw. Sb₂O₃ in Spezifikation wirtschaftlich herstellen lassen.

Durch Kombination der Unterdruckläuterung verschiedener Glasarten mit den Heißformgebungsverfahren Floaten, Overflow-Fusion, allen Rohrziehverfahren wie dem Danner- oder Vello-Verfahren, Pressen, Blasen, Walzen, Up-Draw oder Down-Draw lassen sich eine Vielfalt von Produkten ohne As₂O₃ bzw. Sb₂O₃ in Blasenspezifikation herstellen.

Gehört die Glasart zu der Gruppe der Bleigläser, so läßt sich das gewonnene Glas z. B. anwenden für die Herstellung von Trinkgläsern, für den Röntgenschutz, zur Herstellung von Fernsehtrichtern und von Fernsehhälsen.

Gehört die Glasart zu der Gruppe der Glaskeramik, so läßt sich das geläuterte Produkt z. B. anwenden zur Herstellung von Kochflächen, Kaminscheiben, Herdscheiben, Reflektoren, Harddisks, für die Zwecke des Brandschutzes, für Displays.

Gehört die Glasart zu der Gruppe der Borosilicat-Gläser, so läßt sich das geläuterte Glas z. B. anwenden für Displays, für den Brandschutz, zur Herstellung von Backschalen, für Verpackungszwecke, für Laborzwecke, als technische Rohre, zur Pharmaverpackung, für die Fotovoltaik, zur Herstellung von Lampenglas, für Tischgeschirr.

Gehört die Glasart zu der Gruppe der alkalifreien Gläser, so läßt sich das geläuterte Glas z. B. verwenden zur Herstellung von Displays, für die Fotovoltaik sowie für Lampengläser.

Gehört die Glasart zu der Gruppe der Kalk-Natron-Gläser, so läßt sich das geläuterte Glas z. B. anwenden für die Herstellung von Fensterglas, für Trinkgläser, für Verpackungszwecke, für die Herstellung von Fernsehschirmen, für die Herstellung technischer Rohre, für die Pharmaverpackung, für Harddisks, für PDP-Displays.

In allen Fällen kann die Blasenspezifikationmit Hilfe der Unterdruckläuterung unter Zuführung von nicht-toxischen Redox-Läutermitteln und/oder Sulfat und/oder Chlorid und/oder Fluorid und/oder völlig ohne Läutermittel erfüllt werden.

Je nach Auslegung des Unterdruckaggregates können ohne Zusatz von As₂O₃ bzw. Sb₂O₃ Blasenqualitäten bis hin zu Displayqualität Blasenanzahl <0,1BI/kg und Blasendurchmesser <0,08 mm erreicht werden.

Die Erfindung ist besonders wichtig für alle Produkte, die mit Hilfe des Floatverfahrens hergestellt werden. Hierbei wird bekanntlich eine Glasschmelze auf ein Zinnbad ausgegossen, und zwar in einer Schutzgasatmosphäre, um das Zinnbad vor Oxidation zu schützen. Bei Einsatz der effektiven, toxischen Läutermittel As₂O₃ bzw. Sb₂O₃ würde es zur Reduktion zu metallischem As bzw. Sb an der Floatglasoberseite kommen. Diese metallische Ausscheidung ist jedoch für die meisten Produkte nicht zulässig.

Durch die erfindungsgemäße Kombination der Unterdruckläuterung verschiedener Glasarten mit den Heißformgebungsverfahren lassen sich Produkte hoher Qualität wirtschaftlich darstellen.

Bei alkalifreier Arbeitsweise kommt beispielsweise die folgende Grundglaszusammensetzung auf Oxidbasis in Betracht, ausgedrückt in Gewichtsprozenten:

| | |
|---|---|
| SiO₂ | 55 ... 66 |
| B₂O₃ | 1 ... 11 |
| Al₂O₃ | 12 ... 20 |
| MgO | 0 ... 8 |
| CaO | 0 ... 10 |
| SrO | 0 ... 9 |
| BaO | 0 ... 5 |
| ΣRO | 7 ... 19 |
| ZnO | 0 ... 2 |
| TiO₂ | 0 ... 2 |
| ZrO₂ | 0 ... 2 |
| SnO₂ | 0 ... 2 |
| CeO₂ | 0 ... 2 |

und zwar bei einer Dichte bei Raumtemperatur von 20° C zwischen 2,30 und 2,60 g/cm³;
einer linearen Ausdehnung α bei 20° C bis 300° C zwischen 2,80 und 3,85 10⁻⁶/K;
einer Transformationstemperatur Tg zwischen 670° C und 750° C;
einer Temperatur bei der Viskosität von 104 dPa · s zwischen 1230° C und 1330° C;
wobei Alkalifreiheit einen Restalkalioxidgehalt (Li₂O + Na₂O + K₂O + Rb₂O + Cs₂O) von kleiner 2000 ppm bedeutet.

Als Beispiel für Borosilicat mit einer Grundglaszusammensetzung auf Oxidbasis in Gewichtsprozenten kommt folgendes in Betracht:

| | |
|---|---|
| SiO₂ | 68 ... 82 |
| B₂O₃ | 6 ... 15 |
| Al₂O₃ | 2 ... 10 |
| MgO | 0 ... 5 |
| CaO | 0 ... 5 |
| SrO | 0 ... 5 |
| BaO | 0 ... 4 |
| Li₂O | 0 ... 3 |
| Na₂O | 3 ... 12 |
| K₂O | 0 ... 5 |
| TiO₂ | 0 ... 2 |
| ZrO₂ | 0 ... 3 |
| SnO₂ | 0 ... 2 |
| CeO₂ | 0 ... 2 |

bei einer Dichte bei Raumtemperatur zwischen 2,20 und 2,40 g/cm³;
bei einer linearen Ausdehnung α bei Temperaturen zwischen 20° C und 300° C zwischen 3,00 und 6,00 · 10⁻⁶K;
bei einer Transformationstemperatur Tg zwischen 500° C und 600° C;
bei einer Temperatur von 1100° C und 1300° C bei der Viskosität von 10⁴ dPa·s.

## Patentansprüche

1. Verfahren zur Herstellung von Produkten mit anspruchsvoller Blasenspezifikation ohne Einsatz von As₂O₃/Sb₂O₃, umfassend die folgenden Verfahrensschritte:
1.1 es wird aus einem Gemenge oder aus Scherben oder aus einem Gemisch dieser beiden eine Glasschmelze hergestellt;
1.2 die Glasschmelze wird einem Läuterprozeß ohne Zusatz von As₂O₃/Sb₂O₃ unterzogen;
1.3 das Läutern erfolgt unter Unterdruck ohne Zusatz von As₂O₃/Sb₂O₃;
1.4 die zu läuternde Schmelze gehört zu einer der nachstehenden Glasarten
Blei-Glas (PbO > 5 %)
Glaskeramik (kristalline Phase durch Temperaturbehandlung ausscheidbar)
Borosilicat-Glas (B₂O₃ > 0,5 %)
alkalifreies Glas (R₂O < 0,5 %)
Kalk-Natron-Glas (R₂O > 5,0 % und RO > 5,0 %);
1.5 das geläuterte Glas wird mit Hilfe einer der nachstehenden Heißformgebungsverfahren zu einem Produkt verarbeitet:
Floaten
Overflow-Fusion
Rohrziehverfahren, wie dem Danner- oder Vello-Verfahren Pressen
Blasen
Walzen
Up-Draw
Down-Draw
wobei R₂O Alkalioxide wie Li₂O, Na₂O, K₂O bedeuten, und RO Erdalkalioxide wie MgO, CaO, SrO, BaO ...

2. Verfahren nach Anspruch 1, **dadurch gekennzeichnet, daß** aus Schmelzen zugehörig der Glasart "Bleiglas" folgende Produkte gefertigt werden:
Trinkgläser
Röntgenschutz
Fernsehtrichter
Fernsehhälse.

3. Verfahren nach Anspruch 1, **dadurch gekennzeichnet, daß** aus Schmelzen zugehörig der Glasart "Glaskeramik" folgende Produkte gefertigt werden:
Kochflächen
Kaminscheiben
Herdscheiben
Reflektoren
Harddisks
Brandschutz
Displays.

4. Verfahren nach Anspruch 1, **dadurch gekennzeichnet, daß** aus Schmelzen zugehörig der Glasart "Borosilicatglas" folgende Produkte gefertigt werden:
Displays
Brandschutz
Backschalen
Verpackungsglas
Laborglas
technisches Rohr
Pharmaverpackung
Fotovoltaik
Lampenglas
Tischgeschirr.

5. Verfahren nach Anspruch 1, **dadurch gekennzeichnet, daß** aus Schmelzen zugehörig der Glasart "alkalifreie Gläser" folgende Produkte gefertigt werden:
TFT-Display
Fotovoltaik
Lampenglas.

6. Verfahren nach Anspruch 1, **dadurch gekennzeichnet, daß** aus Schmelzen zugehörig der Glasart "Kalk-Natron-Glas" folgende Produkte gefertigt werden:
Fensterglas
Trinkgläser
Verpackungsglas
Fernsehschirme
technisches Rohr
Pharmaverpackung
Harddisk
PDP-Display
STN-Display

7. Verfahren nach einem der Ansprüche 1 bis 6, **dadurch gekennzeichnet, daß** das zu fertigende Produkt einer Blasenspezifikation von
Blasenanzahl < 10 Bl/kg und Blasengröße < 0,3 mm unterliegt und diese erfüllt wird.

8. Verfahren nach einem der Ansprüche 1 bis 6, **dadurch gekennzeichnet, daß** das zu fertigende Produkt einer Blasenspezifikation von
Blasenanzahl < 1 BI/kg und Blasengröße < 0,3 mm unterliegt und diese erfüllt wird.

9. Verfahren nach einem der Ansprüche 1 bis 6, **dadurch gekennzeichnet, daß** das zu fertigende Produkt einer Blasenspezifikation von
Blasenanzahl < 0,1 Bl/kg und Blasengröße < 0,3 mm unterliegt und diese erfüllt wird.

10. Verfahren nach einem der Ansprüche 1 bis 6, **dadurch gekennzeichnet, daß** das zu fertigende Produkt einer Blasenspezifikation von
Blasenanzahl < 0,1 Bl/kg und Blasengröße 0,08 mm unterliegt und diese erfüllt wird.

11. Verfahren nach einem der Ansprüche 1 bis 10, **dadurch gekennzeichnet, daß** beim Läuterprozeß alternative Redox-Läutermittel wie zum Beispiel SnO₂, CeO₂, MoO₃, EuO₂, TiO₂, Fe₂O₃ und/oder Sulfat und/oder Chlorid und/oder Fluorid zugesetzt werden.
